# EUROPÄISCHE PATENTSCHRIFT

(11) **EP 3 474 412 B1**
(45) Veröffentlichungstag und Bekanntmachung des Hinweises auf die Patenterteilung: **15.04.2020**
(21) Anmeldenummer: 18201795.4
(22) Anmeldetag: 22.10.2018
(51) Int. Cl.: H02P 9/04, H02J 3/38, F02D 29/06, F02B 63/04, H02J 3/18, F02D 17/02, F02D 37/02, F02P 9/00, F02D 41/00

(54) **STROMAGGREGAT ZUR EINSPEISUNG VON ENERGIE IN EIN ELEKTRISCHES ENERGIEVERSORGUNGSNETZ UND VERFAHREN HIERZU**
POWER SUPPLY FOR SUPPLYING ENERGY TO AN ELECTRICAL ENERGY SUPPLY NETWORK AND METHOD THEREFOR
ALIMENTATION ÉLECTRIQUE POUR FOURNIR DE L'ÉNERGIE À UN RÉSEAU D'ALIMENTATION EN ÉLECTRICITÉ ET SON PROCÉDÉ

(30) Priorität: 23.10.2017 DE 102017124709; 26.01.2018 EP 18153721
(43) Veröffentlichungstag der Anmeldung: 24.04.2019
(73) Patentinhaber: Geisberger, Maximilian, 84419 Schwindegg (DE)
(72) Erfinder: Geisberger, Maximilian, 84419 Schwindegg (DE); Eichhorn, Sebastian, 83624 Otterfing (DE)
(74) Vertreter: Flügel Preissner Schober Seidel

(56) Entgegenhaltungen:
- EP-A1- 3 012 936
- US-A1- 2002 190 525
- US-A1- 2012 175 876

## Beschreibung

Die Erfindung betrifft ein Stromaggregat zur Einspeisung von Energie in ein elektrisches Energieversorgungsnetz, das eine Verbrennungskraftmaschine, die mindestens einen Zylinder aufweist, und einen Generator, der durch die Verbrennungskraftmaschine antreibbar ist, umfasst. Die Erfindung betrifft ferner ein Verfahren zur Einspeisung von Energie in ein elektrisches Energieversorgungsnetz.

Zur Einspeisung von Energie in ein elektrisches Energieversorgungsnetz ist es bekannt, eine Verbrennungskraftmaschine zu betreiben, die einen Generator antreibt. Durch die Verbrennungskraftmaschine wird die chemische Energie eines Brennstoffes, insbesondere eines Gases, wie beispielsweise Biogas, Holzgas, Grubengas, Erdgas oder Propan, in kinetische Energie umgewandelt, mit welcher der Generator dann angetrieben wird. Der Generator wandelt die kinetische Energie in elektrische Energie um, die in das Energieversorgungsnetz eingespeist wird.

Um Energie in ein Energieversorgungsnetz einspeisen zu dürfen, müssen vorgegebene Anschlussrichtlinien eingehalten werden. Nur wenn die technischen Anforderungen der Richtlinien nachgewiesen werden, erfolgt eine Zertifizierung, die zum Einspeisen von Energie in das Energieversorgungsnetz berechtigt. Seit der BDEW Mittelspannungsrichtlinie von 2008 (Bundesverband der Energie- und Wasserwirtschaft e. V., Technische Richtlinie Erzeugungsanlagen am Mittelspannungsnetz (2008)) und dem Inkrafttreten der Normen VDE-AR-N 4120 2015-01-00: Technische Bedingungen für den Anschluss und Betrieb von Kundenanlagen an das Hochspannungsnetz (TAB Hochspannung) und VDE-AR-N 4110 2017-03-00: Technische Regeln für den Anschluss von Kundenanlagen an das Mittelspannungsnetz und deren Betrieb (TAR Mittelspannung) ist eine dynamische Netzstützung in den technischen Anschlussrichtlinien verankert.

Unter dynamischer Netzstützung versteht der Fachmann ein Verhalten der Energieerzeugungseinheit, das bei Fehlern im Energieversorgungsnetz nachgewiesen werden muss. Als ein Netzfehler, ein sogenannter Fault-Ride-Through-Fall (FRT), versteht der Fachmann eine wesentliche Abweichung der Netzspannung im Netzanschlusspunkt von der Nennspannung des Netzanschlusspunktes. Je nach Art des Fehlers wird dann von einem Low Voltage Ride-Through (LVRT), beziehungsweise Under Voltage Ride-Through (UVRT), oder High Voltage Ride-Through (HVRT), beziehungsweise Over Voltage Ride-Through (OVRT), gesprochen.

Exemplarisch für einen LVRT-Fall nennt die BDEW Mittelspannungsrichtlinie für sogenannte Aggregate vom Typ 2, unter welche die direkt gekoppelten Asynchrongeneratoren fallen, Spannungseinbrüche von bis zu 1500 ms und Spannungsausfälle von bis zu 150 ms. Für den LVRT-Fall ist es Vorschrift, dass während des Fehlers minimale Wirkleistung in das Energieversorgungsnetz eingespeist wird und dass Blindstrom in das Netz eingespeist werden muss, um spannungsstützend zu wirken. Das Aggregat muss also stets im übererregten Bereich gehalten werden.

Als Generatoren werden gewöhnlich Synchrongeneratoren verwendet, für die als sogenannte Aggregate vom Typ 1 im Sinne der BDEW Mittelspannungsrichtlinie die Anforderungen an die dynamische Netzstützung weniger hoch sind als bei den Asynchrongeneratoren vom Typ 2. Allerdings müssen Synchrongeneratoren zum Einspeisen von Energie in das Energieversorgungsnetz in der Regel erst mit dem Energieversorgungsnetz synchronisiert werden. Synchrongeneratoren können sich zudem unter gewissen Umständen desynchronisieren. Dies ist häufig bei dem Durchfahren eines Netzfehlers der Fall.

Diese Probleme können sich bei einer Asynchronmaschine, insbesondere bei einer Asynchronmaschine mit Kurzschlussläufer, einem sogenannten Kurzschlussläufergenerator, oder auch bei einem sogenannten Synchron-Reluktanzgenerator hingegen nicht ergeben.

Vor allem der Synchron-Reluktanzgenerator synchronisiert sich selbst und kann sich aufgrund der Erregung durch das Netz nicht desynchronisieren. Ein Synchron-Reluktanzgenerator zeichnet sich durch einen Ständer mit verteilten Wicklungen wie bei einer Asynchronmaschine aus. Der Läufer weist jedoch einen von der Asynchronmaschine abweichenden Aufbau auf, bei dem die Bleche eine spezielle Geometrie haben, wodurch besonders ausgeprägte Pole entstehen. Direkt gekoppelte Synchron-Reluktanzgeneratoren gelten als direkt gekoppelte Synchrongeneratoren und damit als Aggregate vom Typ 1 im Sinne der BDEW Mittelspannungsrichtlinie.

Ein somit vergleichsweise einfach an das Energieversorgungsnetz koppelbarer Synchron-Reluktanzgenerator oder Kurzschlussläufergenerator verhält sich prinzipiell stark induktiv. Der Synchron-Reluktanzgenerator oder auch der Kurzschlussläufergenerator bezieht für den Aufbau und die Aufrechterhaltung des Hauptfeldes Blindleistung aus dem Energieversorgungnetz. Dem Generator kann eine Kompensationsanlage für die Blindleistung parallel geschaltet werden, so dass während des Betriebs durch Zuschaltung von Kondensatoren der Blindleistungsbedarf des Generators kompensiert wird. So ist, je nach Vorgabe des Netzbetreibers, die Einspeisung oder der Bezug einer variablen Blindleistung durch das Aggregat möglich. Der Blindleistungsbedarf des Generators liegt allerdings auch während eines Netzfehlers vor.

Bekannt ist es, während des FRT-Falls eine Reduktion der Wirkleistungsabgabe durch den Leistungsregler der Verbrennungskraftmaschine zu bewirken. So wird nahezu direkt proportional zu der Reduktion der Wirkleistung der Bezug der Blindleistung reduziert. In diesem Zusammenhang erweist sich jedoch häufig die Trägheit der Regelung als problematisch. In der Praxis wird eine schnelle Regelung durch Spezialalgorithmen, die nur für diesen Sonderfall eingesetzt werden, realisiert. Allerdings kann es durch eine solch schnelle Regelung infolge des im Anregelvorgang noch hohen Ladedrucks zu einem sogenannten Turboladerpumpen kommen. Mechanische Schäden sind hierbei nicht auszuschließen.

Zudem muss die Vorgabe, nach Fehlerende schnell wieder die Wirkleistungseinspeisung vor Fehlereintritt bereitzustellen, eingehalten werden. Die Trägheit des Regelsystems schafft hier erhebliche Schwierigkeiten, die geforderten Zeitkonstanten einzuhalten.

Eine Vorrichtung, mit der bei einem Synchrongenerator bei Lastabwürfen die Drehzahl konstant gehalten werden soll, beschreibt EP 1 281 851 A2. Mit Hilfe von einer Leistungsmessung oder der Überwachung der Generatorkupplung soll durch Aussetzen der Zündung eine plötzliche Drehzahlerhöhung des Motors verhindert werden.

Aus US 2002/0190525 A1 ist ein Stromaggregat bekannt, das neben einer Antriebsmaschine und einem Generator eine dem Generator zugeordnetet Energiespeichereinheit aufweist. Damit das Stromaggregat nicht kurzfristig überladen wird, ist eine Kupplung vorgesehen, welche die Antriebsmaschine von dem Generator entkoppelt.

Weiterhin beschreibt US 2012/0175876 A1 ein Stromaggregat, das eine Verbrennungskraftmaschine, einen Generator und eine Regelvorrichtung, die zur dynamischen Netzstützung beim Durchfahren eines Fehlers des Energieversorgungsnetzes mindestens einen Zylinder der Verbrennungskraftmaschine abschaltet, aufweist.

Einen Algorithmus, der beschreibt, welcher Zylinder zu welchem Zeitpunkt abgeschaltet werden soll, damit die mechanische Abnutzung während des Regelbetriebs minimiert wird, offenbart EP 2 952 712 A1.

EP 2 955 355 A1 offenbart ein Verfahren zur Zylinderabschaltung für die Optimierung und Angleichung der Zylinderkopftemperaturen, um den Verschleiß zu minimieren.

Aus AT 509 558 B1 ist eine stationäre Kraftanlage bekannt, die durch ein Verfahren betrieben wird, bei dem in einer Brennkraftmaschine ein Treibstoff-Luft-Gemisch verbrannt wird und die Brennkraftmaschine einen Wechselstromgenerator antreibt, der mit einem Energieversorgungsnetz verbunden ist und Energie an das Energieversorgungsnetz abgibt. Bei einem Überschreiten der Ist-Drehzahl des Wechselstromgenerators oder der Brennkraftmaschine infolge eines Ausfalls des Energieversorgungsnetzes wird die Verbrennung in der Brennkraftmaschine zumindest teilweise gestoppt, während die Verbindung zum Energieversorgungsnetz aufrechterhalten wird. Zu diesem Zweck wird eine das Treibstoff-Luft-Gemisch zündende Zündeinrichtung deaktiviert.

Ferner offenbart EP 3 015 668 A1 ein Verfahren zum Betreiben einer Brennkraftmaschine, in der ein Treibstoff-Luft-Gemisch verbrannt wird. Die Brennkraftmaschine treibt einen Generator an, der mit einem Energieversorgungsnetz verbunden ist und Energie an das Energieversorgungsnetz abgibt. Bei einem dynamischen Netzfehler, durch den die Leistungsabgabe des Generators an das Energieversorgungsnetz verringert ist, wird die Kraftstoffzufuhr an die Brennkraftmaschine erhöht, um sicherzustellen, dass die Brennkraftmaschine auch bei einem länger anhaltenden Netzfehler nach Abklingen des Spannungseinbruchs wieder rasch die Nennlast erreicht.

Des Weiteren offenbart EP 3 012 936 A1 eine Energieerzeugungssystem mit einer Antriebsmaschine zum Umwandeln einer ersten Energie in eine zweite Energie. Das System umfasst einen Induktionsgenerator, der mit der Antriebsmaschine gekoppelt und ausgebildet ist, elektrische Energie unter Verwendung der zweiten Energie zu erzeugen. Außerdem umfasst das System einen Wechselrichter, der elektrisch mit dem Induktionsgenerator gekoppelt ist, um eine Anschlussspannung des Induktionsgenerators während eines Netzverlustzustands zu steuern. Ferner umfasst das System eine Leistungsableitungsvorrichtung, die mit dem Wechselrichter gekoppelt ist, um die vom Induktionsgenerator während des Netzverlustzustands erzeugte Leistung abzuleiten.

Der Erfindung liegt die **Aufgabe** zugrunde, ein Stromaggregat und ein Verfahren zur Einspeisung von Energie in ein elektrisches Energieversorgungsnetz mit Hilfe von solch einem Stromaggregat anzugeben, durch welche sich die dynamische Netzstützung beim Durchfahren eines Fehlers im Energieversorgungsnetz optimieren lässt.

Die Aufgabe wird durch ein Stromaggregat nach Anspruch 1 und ein Verfahren nach Anspruch 8 gelöst. Bevorzugte Ausgestaltungen des Stromaggregats und des Verfahrens werden in den Ansprüchen 2 bis 7 und 9 bis 13 definiert.

Das erfindungsgemäße Stromaggregat dient zur Einspeisung von Energie in ein elektrisches Energieversorgungsnetz und umfasst einen als Synchron-Reluktanzgenerator oder als Kurzschlussläufergenerator ausgebildeten Generator, der zum Aufbau und zur Aufrechterhaltung eines Rotormagnetfeldes eine erste Blindleistung aus dem Energieversorgungsnetz bezieht; eine Verbrennungskraftmaschine, die mindestens einen Zylinder aufweist und durch die der Generator zum Einspeisen von elektrischer Energie mit einer Wirkleistung in das Energieversorgungsnetz antreibbar ist. Das Stromaggregat umfasst ferner eine dem Generator zugeordnete Kompensationsanlage, die dreiphasige Kondensatoren umfasst, die dem Generator parallelgeschaltet sind, und die ausgebildet ist, dem Energieversorgungsnetz eine zweite Blindleistung, die den Bezug der ersten Blindleistung aus dem Energieversorgungsnetz bei Bedarf eliminiert, bereitzustellen. Zudem weist das Stromaggregat eine Regelvorrichtung auf, die zur dynamischen Netzstützung beim Durchfahren eines Fehlers des Energieversorgungsnetzes, insbesondere bei einem Low Voltage Ride Through - LVRT - Fall, den mindestens einen Zylinder der Verbrennungskraftmaschine abschaltet. Darüber hinaus weist die die Regelvorrichtung eine Spannungsüberwachung auf, die im Falle eines Fehlers des Energieversorgungsnetzes ein Steuersignal ausgibt, auf Basis dessen die Regelvorrichtung das Abschalten des Zylinders steuert. Außerdem weist das Stromaggregat mindestens eine Drosselklappe auf, die zum Drosseln der Leistung der Verbrennungskraftmaschine dient und derart ausgestaltet ist, dass die Stellung der Drosselklappe beim Durchfahren des Fehlers des Energieversorgungsnetzes nahezu unverändert bleibt.

Zweckmäßigerweise weist die Verbrennungskraftmaschine eine Vielzahl an Zylindern auf, vorzugsweise mehr als sechs, weiter vorzugsweise mehr als acht. Beim Abschalten von mindestens einem Zylinder verringert sich die von der Verbrennungskraftmaschine über die Kupplung an den Generator übertragene Wirkleistung.

Die Erfindung macht sich die Erkenntnis zu eigen, dass ein Synchron-Reluktanzgenerator oder auch ein Kurzschlussläufergenerator prinzipiell induktiv sind und daher für den Aufbau und die Aufrechterhaltung des Rotorhauptfeldes Blindleistung aus dem Energieversorgungnetz benötigen. Der Blindleistungsbedarf des Generators aus dem Energieversorgungsnetz ist lediglich von der Wirkleistungsabgabe abhängig. Sinkt die Netzspannung während etwa des LVRT-Falls ab, ist ein in zweiter Potenz größerer Blindstrom für die Aufrechterhaltung des Magnetfeldes erforderlich.

Durch die Unterbindung der Zündung einzelner Zylinder der Verbrennungskraftmaschine verringert sich nahezu verzögerungsfrei das an der Motorwelle der Verbrennungskraftmaschine anliegende Drehmoment. Somit verringert sich die an den Generator übertragene Wirkleistung. Die von der abgegebenen Wirkleistung abhängige Blindleistung, welche der Generator aufnimmt, wird reduziert.

Der Blindleistungsbezug des Generators wird durch die kapazitive Wirkung der Kondensatoren in der Kompensationsanlage bei Bedarf eliminiert. Darüber hinaus wird eine Blindleistungseinspeisung in das Energieversorgungsnetz ermöglicht. Die Blindleistungsbereitstellung der Kompensationsanlage ist in zweiter Potenz von der Spannung des Energieversorgungsnetzes abhängig, wonach sich bei einem Spannungseinbruch im Energieversorgungsnetz die Blindleistungsbereitstellung der Kompensationslange schlagartig verringert.

Bei einem LVRT-Fall des Energieversorgungsnetzes zum Beispiel ist die dynamische Netzstützung nachzuweisen. Durch den Spannungseinbruch im Energieversorgungsnetz verringert sich die Blindleistungsbereitstellung der Kompensationsanlage. Der Blindleistungsbedarf des Synchron-Reluktanzgenerators wird jedoch weiter gedeckt. Die Einspeisung eines Blindstromes in das Energieversorgungsnetz wird auch während des Netzfehlers sichergestellt. Somit sind die Anforderungen der dynamischen Netzstützung erfüllt.

Durch die Abschaltung des wenigstens einen Zylinders der Verbrennungskraftmaschine ist im LVRT-Fall eine aufwendige Regelung des Leistungsreglers der Verbrennungskraftmaschine durch Spezialalgorithmen nicht notwendig. Somit können mechanische Schäden durch einen im Anregelvorgang noch hohen Ladedruck, dem Turboladepumpen, ausgeschlossen werden.

Nach Fehlerende muss die Wirkleistungseinspeisung vordem Auftreten des Fehlers in das Energieversorgungsnetz so schnell wie möglich wieder erreicht werden. Sobald Zündungen in den abgeschalteten Zylindern wieder stattfinden, erhöht sich die Wirkleistung der Verbrennungskraftmaschine. Aufgrund des geringeren Abgasvolumenstroms während des Netzfehlers hat sich der Ladedruck des Brennraums abgesenkt. Durch die vollständige Verbrennung des Brennstoffs in der Verbrennungskraftmaschine erhöht sich der Abgasvolumenstrom und der Ladedruck baut sich wieder auf. Es zeigt sich ein PT1-Verhalten der abgegebenen Wirkleistung. Innerhalb eines Zeitfensters von wenigen Sekunden wird die Wirkleistungsabgabe vor dem Auftreten des Fehlers wieder erreicht. Das Auftreten von mechanischen Schäden lässt sich weitgehend ausschließen.

Die Erfindung macht sich die weitere Erkenntnis zu eigen, dass die Drosselklappe zum Drosseln der Leistung der Verbrennungskraftmaschine derart ausgestaltet ist, dass die Stellung der Drosselklappe beim Durchfahren des Netzfehlers nahezu unverändert bleibt.

Die von der Verbrennungskraftmaschine an den Generator übertragene Wirkleistung verringert sich nahezu verzögerungsfrei durch das Abschalten von mindestens einem Zylinder. Eine Steuerung der Wirkleistung durch einen Leistungsregler, insbesondere durch die Drosselklappe zum Drosseln der Leistung der Verbrennungskraftmaschine, ist somit nicht erforderlich. Es hat sich allerdings überraschenderweise herausgestellt, dass auch während des Netzfehlers die Drehzahl der Verbrennungskraftmaschine und des Generators nahezu konstant bleiben kann, so dass damit die Anforderung, am Netz zu bleiben, erfüllt ist.

In einer bevorzugten Ausgestaltung umfasst der Zylinder eine primärseitige Zündleitung zum Ausführen einer Zündung in dem Zylinder. Die Regelvorrichtung unterbricht zum Abschalten des Zylinders die primärseitige Zündleitung, um eine Zündung in dem Zylinder zu verhindern.

In einer alternativen Ausgestaltung umfasst der Zylinder eine primärseitige Zündleitung zum Ausführen einer Zündung in dem Zylinder. An der primärseitigen Zündleitung ist eine regelbare Induktivität angeordnet. Zum Abschalten des Zylinders erhöht die Regelvorrichtung die regelbare Induktivität stufenweise, um eine Zündung in dem Zylinder zu verhindern. Durch die erhöhte Induktivität wird der Gradient der Stromstärke auf der Primärseite der Zündspule derart verringert, dass keine Spannungsspitze und damit auch kein Zündfunke auf der Sekundärseite entstehen kann.

In einer weiteren alternativen Ausgestaltung verschiebt die Regelvorrichtung zum Abschalten des Zylinders den Zeitpunkt der Zündung in dem Zylinder auf einen Zeitpunkt, zu dem in dem Zylinder bei einer Zündung keine Leistung umgesetzt wird, also zu dem in dem Zylinder etwa kein Brennstoff-Luft-Gemisch zum Zünden vorhanden ist.

In einer weiteren alternativen Ausgestaltung umfasst der Zylinder eine primärseitige Zündleitung zum Ausführen einer Zündung in dem Zylinder. Die primärseitige Zündleitung umfasst eine erste Zündanlage und eine zweite Zündanlage. Die zweite Zündanlage ist nicht an die abzuschaltenden Zylindern angeschlossen. Zum Abschalten des Zylinders steuert die Regelvorrichtung die zweite Zündanlage anstelle der ersten Zündanlage an.

Vorteilhafterweise ist die Regelvorrichtung als eine dreiphasige Spannungsüberwachung ausgebildet. Die zuvor erläuterten Ausgestaltungen und Vorteile gelten auch für das beanspruchte Verfahren.

Ausführungsbeispiele der Erfindung werden im Folgenden anhand der Zeichnungen erläutert. In den Zeichnungen zeigen:
- Fig. 1a: die Grenzlinie für den Spannungsverlauf am Netzanschlusspunkt für eine Erzeugungsanlage vom Typ 1 nach der dynamischen Netzunterstützung gemäß der BDEW Mittelspannungsrichtlinie;
- Fig. 1b: die Grenzlinie für den Spannungsverlauf am Netzanschlusspunkt für eine Erzeugungsanlage vom Typ 2 nach der dynamischen Netzunterstützung gemäß der BDEW Mittelspannungsrichtlinie;
- Fig. 2: ein Stromaggregat verbunden mit einem elektrischen Energieversorgungsnetz;
- Fig. 3: ein Diagramm der Blindleistung, die von einem Synchron-Reluktanzgenerator aufgenommen wird, und der Blindleistung, die von einer dem Generator zugeordneten Kompensationsanlage bereitgestellt wird, im LVRT-Fall über die Zeit;
- Fig. 4: eine erste Ausführungsform einer Abschalteinrichtung;
- Fig. 5: eine zweite Ausführungsform der Abschalteinrichtung;
- Fig. 6: eine dritte Ausführungsform der Abschalteinrichtung und
- Fig. 7: eine vierte Ausführungsform der Abschalteinrichtung.

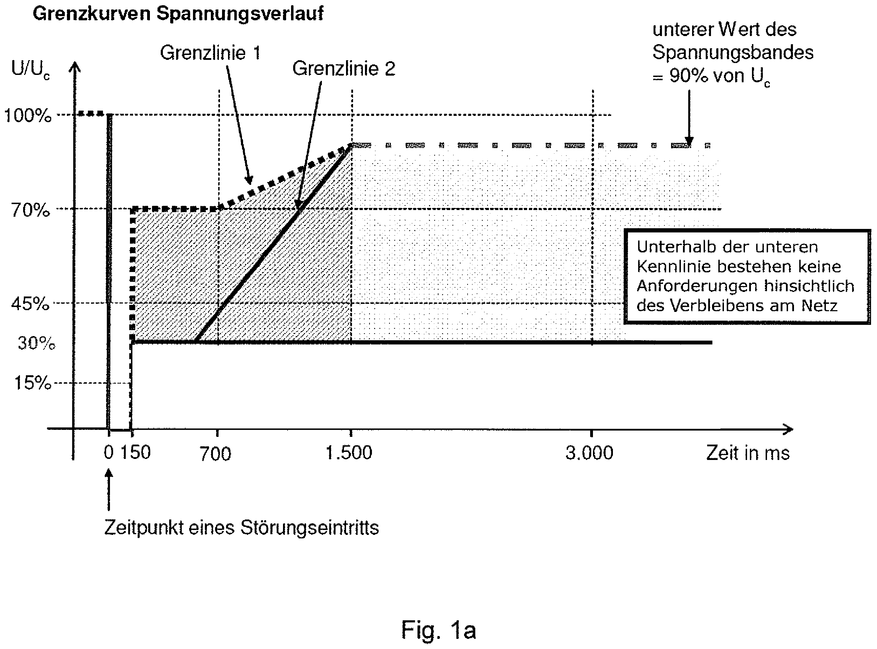

Fig. 1a zeigt die Grenzlinie für den Spannungsverlauf am Netzanschlusspunkt für eine Erzeugungsanlage vom Typ 1, unter welche Synchron-Reluktanzgeneratoren fallen, nach der dynamischen Netzunterstützung gemäß der BDEW Richtlinie "Technische Richtlinie Erzeugungsanlagen am Mittelspannungsnetz". Demnach dürfen Spannungseinbrüche mit Werten oberhalb der Grenzlinie nicht zur Instabilität oder zum Trennen der Erzeugungsanlage vom Netz führen.

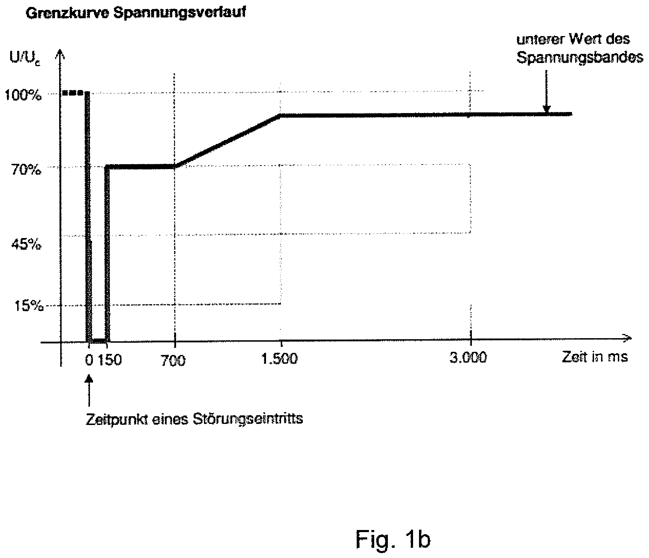

Fig. 1b zeigt die Grenzlinie für den Spannungsverlauf am Netzanschlusspunkt für eine Erzeugungsanlage vom Typ 2, unter welche direkt gekoppelte Asynchrongeneratoren, insbesondere Kurzschlussläufergeneratoren, fallen, nach der dynamischen Netzunterstützung gemäß der BDEW Richtlinie "Technische Richtlinie Erzeugungsanlagen am Mittelspannungsnetz". Auch hier dürfen Spannungseinbrüche mit Werten oberhalb Grenzlinie 1 nicht zur Instabilität oder zum Trennen der Erzeugungsanlage vom Netz führen.

Bei Spannungseinbrüchen mit Werten oberhalb der Grenzlinie 2 und unterhalb der Grenzlinie 1 sollen Erzeugungsanlagen den Fehler durchfahren, ohne sich vom Netz zu trennen; die Einspeisung eines Kurzschlussstromes während dieser Zeit ist mit dem Netzbetreiber abzustimmen. In Abstimmung mit dem Netzbetreiber ist eine Verschiebung der Grenzlinie 2 erlaubt, wenn dies das Netzanschlusskonzept der Erzeugungsanlage erfordert. Ebenfalls in Abstimmung mit dem Netzbetreiber ist eine kurzzeitige Trennung vom Netz erlaubt, falls die Erzeugungsanlage spätestens 2 s nach Beginn der kurzzeitigen Trennung resynchronisiert werden kann. Nach erfolgter Resynchronisation muss die Wirkleistung mit einem Gradienten von mindestens 10% der Nennleistung pro Sekunde gesteigert werden.

Unterhalb der Grenzlinie 2 darf eine kurzzeitige Trennung in jedem Fall durchgeführt werden. Dabei sind in Abstimmung mit dem Netzbetreiber auch längere Resynchronisationszeiten und kleinere Gradienten der Wirkleistungssteigerung nach Resynchronisation als oberhalb der Grenzlinie 2 zulässig.

Die Erfindung wird im Folgenden anhand eines Generators erläutert, der als Synchron-Reluktanzgenerator 12 und damit als Erzeugungsanlage vom Typ 1 gemäß der BDEW Mittelspannungsrichtlinie ausgebildet ist. Die Ausführungen gelten jedoch mutatis mutandis auch für einen Kurzschlussläufergenerator, der trotz Einstufung als Erzeugungsanlage vom Typ 2 gemäß der BDEW Mittelspannungsrichtlinie ein ähnliches Verhalten zeigt.

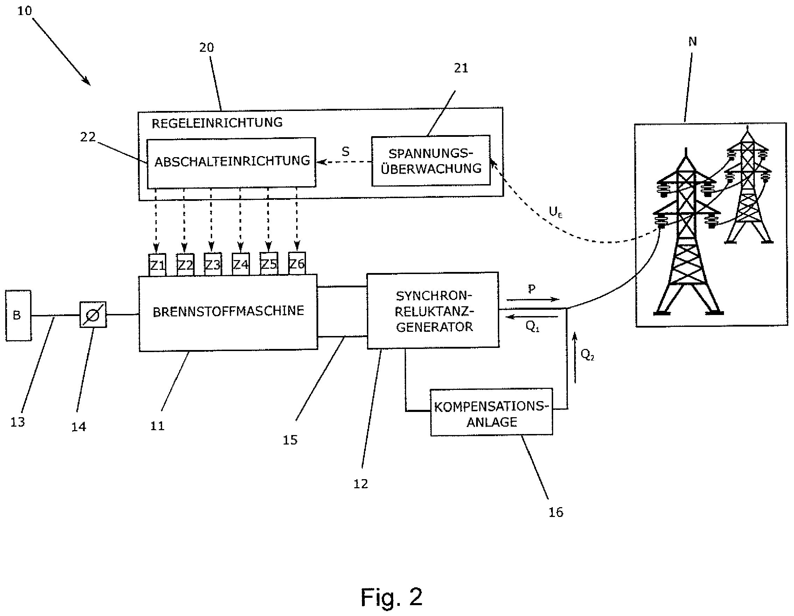

Fig. 2 zeigt ein Stromaggregat 10 zur Einspeisung von Energie in ein elektrisches Energieversorgungsnetz N. Das Stromaggregat 10 umfasst eine Verbrennungskraftmaschine 11 und einen Generator, der als Synchron-Reluktanzgenerator 12 ausgebildet ist. Die Verbrennungskraftmaschine weist mindestens einen Zylinder auf. In der gezeigten Ausführungsform umfasst die Verbrennungskraftmaschine sechs Zylinder Z1 bis Z6. Die Verbrennungskraftmaschine 11 wird über eine Brennstoffleitung 13 mit Brennstoff B versorgt, wobei der Brennstoff B durch eine Drosselklappe 14 in der Brennstoffleitung 13 gedrosselt werden kann. Die chemische Energie des Brennstoffes B wird durch die Verbrennungskraftmaschine 11 in kinetische Energie umgewandelt. Der Synchron-Reluktanzgenerator 12 wird über eine Welle 15 durch die Verbrennungskraftmaschine 11 angetrieben. Der Synchron-Reluktanzgenerator 12 wandelt die kinetische Energie, die er von der Verbrennungskraftmaschine 11 übertragen bekommt, in elektrische Energie um. Die elektrische Energie wird mit einer Wirkleistung P in das elektrische Energieversorgungsnetz N gespeist.

Der Synchron-Reluktanzgenerator 12 arbeitet prinzipiell induktiv und bezieht demnach für den Aufbau und die Aufrechterhaltung des Rotormagnetfeldes eine erste Blindleistung Q₁ aus dem Energieversorgungsnetz N. Das Stromaggregat 10 umfasst deshalb eine Kompensationsanlage 16, welche eine zweite Blindleistung Q₂ zur Verfügung stellt. Die Kompensationsanlage 16 umfasst dreiphasige Kondensatoren, die dem Synchron-Reluktanzgenerator 12 parallelgeschalten sind. Durch die kapazitive Wirkung der Kondensatoren der Kompensationsanlage 16 wird der Bezug der Blindleistung Q₁ des Synchron-Reluktanzgenerators 12 aus dem Energieversorgungsnetz 11 bei Bedarf eliminiert. Darüber hinaus ermöglicht die Kompensationsanlage 16 das Einspeisen von Blindleistung Q₂ in das Energieversorgungsnetz N.

Weiterhin umfasst das Stromaggregat 10 eine Regelvorrichtung 20, welche Zündkerzen (nicht gezeigt) der Zylinder Z1 bis Z6 der Verbrennungskraftmaschine 11 steuert. Die Hauptaufgabe der Regelvorrichtung 20 ist es, die Zündkerzen der Zylinder Z1 bis Z6 jeweils derart zu steuern, dass der Zündfunke der Zündkerzen in einem Moment gezündet wird, zu dem sich in dem jeweiligen Zylinder Z1 bis Z6 ein zündbares Brennstoff-Luft-Gemisch, insbesondere Gas-Luft-Gemisch, befindet, so dass auf diese Weise die Verbrennungskraftmaschine 11 angetrieben wird.

Die Regelvorrichtung 20 umfasst eine Spannungsüberwachung 21 und eine Abschalteinrichtung 22. Die Spannungsüberwachung 21 überwacht die Netzspannung U_{E} des Energieversorgungsnetzes N. Tritt ein LVRT-Fall in dem Energieversorgungsnetz N auf, fällt die Netzspannung U_{E} des Energieversorgungsnetzes N schlagartig ab. Dieser Abfall der Netzspannung U_{E} wird von der Spannungsüberwachung 21 detektiert. Die Spannungsüberwachung 21 sendet ein Steuersignal S an die Abschalteinrichtung 22. Solange die Abschalteinrichtung 22 ein positives Steuersignal S empfängt, schaltet die Abschalteinrichtung 22 mindestens einen der Zylinder Z1 bis Z6 der Verbrennungskraftmaschine 11 ab.

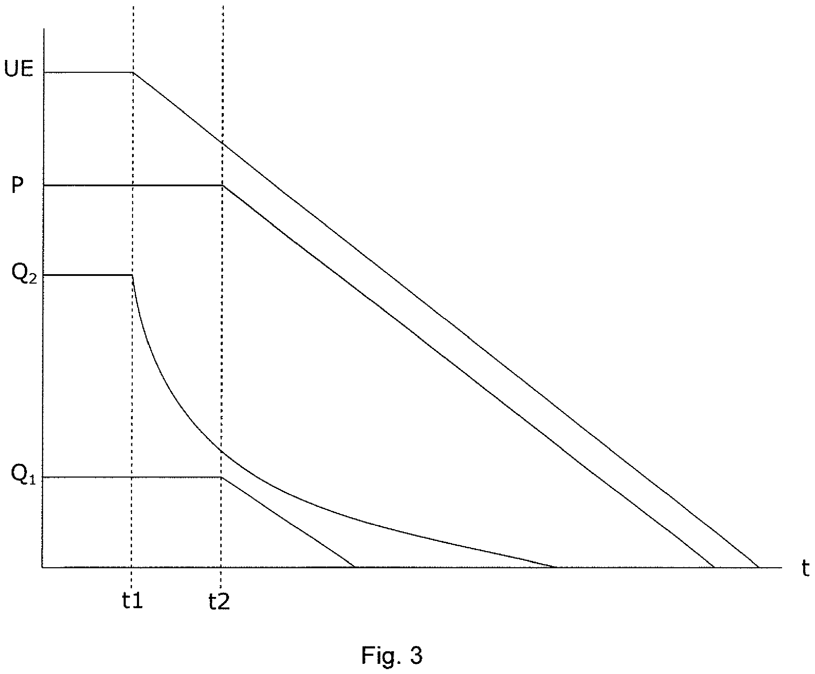

Fig. 3 zeigt die erste Blindleistung Q₁, welche der Synchron-Reluktanzgenerator 12 aufnimmt, und die zweite Blindleistung Q₂, welche die Kompensationsanlage 16 bereitstellt, über die Zeit im LVRT-Fall. Zu dem Zeitpunkt t₁ tritt der LVRT-Fall ein und die Netzspannung U_{E} sinkt. Zu dem Zeitpunkt t₂ hat die Spanungsüberwachung 21 den LVRT-Fall detektiert und beginnt das Abschalten von mindestens einem Zylinder Z1 bis Z6. Durch das Abschalten von mindestens einem Zylinder Z1 bis Z6 der Verbrennungskraftmaschine 11 verringert sich nahezu verzögerungsfrei das Drehmoment, welches an der Welle 15 anliegt. Dadurch reduziert sich die Wirkleistung P des Synchron-Reluktanzgenerators 12. Ebenso reduziert sich die von der abgegebenen Wirkleistung P abhängige, von dem Synchron-Reluktanzgenerator 12 aufgenommene, Blindleistung Q₁. Die von der Kompensationsanlage 16 bereitgestellte Blindleistung Q₂ ist abhängig von der Netzspannung U_{E}. Nachdem die Netzspannung U_{E} im LVRT-Fall ab dem Zeitpunkt t1 absinkt, verringert sich auch die von der Kompensationsanlage 16 bereitgestellte Blindleistung Q₂. Allerdings reicht die Blindleistung Q₂ zu jederzeit aus, um den Bedarf an Blindleistung Q₁ des Synchron-Reluktanzgenerators 12 zu decken und das Energieversorgungsnetz N durch die Einspeisung von Blindstrom zu stützen. Somit sind die Anforderungen an die dynamische Netzstützung erfüllt.

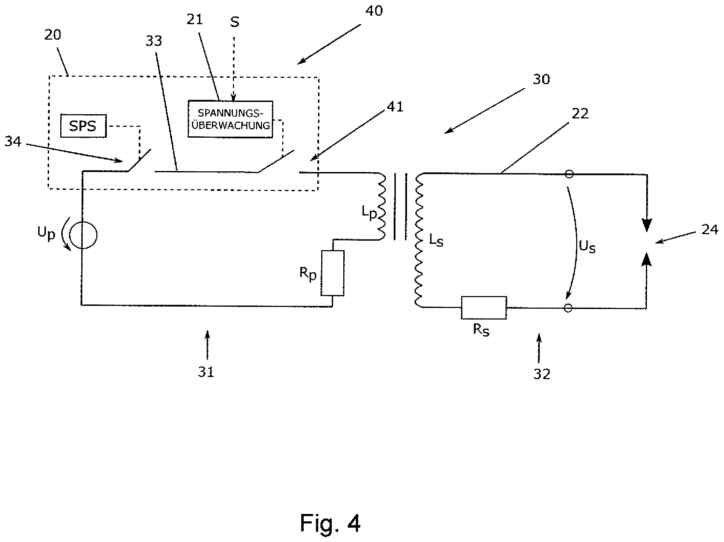

Fig. 4 zeigt eine erste Ausführungsform einer Abschalteinrichtung 40. Die Regelvorrichtung 20 umfasst eine Zündsteuerung SPS und eine Spannungsüberwachung 21. Jeder Zylinder Z1 bis Z6 weist eine Zündspule 30 auf. Die Zündspule 30 umfasst eine Primärseite 31 und eine Sekundärseite 32. Die Primärseite 31 umfasst eine Spannungsquelle, welche die Primärseite 31 mit einer Primärspannung Uₚ versorgt. Außerdem weist die Primärseite 31 einen Primärwiderstand Rₚ und eine Primärspule Lₚ auf. Des Weiteren umfasst die Primärseite 31 eine primärseitige Zündleitung 33 mit einem Zündschalter 34 und einem Unterbrechungsschalter 41. Die primärseitige Zündleitung 33 wird unter Verwendung des Zündschalters 34 und des Unterbrechungsschalters 41 gesteuert. Die Sekundärseite 32 umfasst einen Sekundärwiderstand Rₛ und eine Sekundärspule Lₛ.

Die Zündsteuerung SPS ist derart ausgebildet, dass sie den Zündschalter 34 der primärseitigen Zündleitung 33 zu einem Zeitpunkt schließt, in dem sich in dem jeweiligen Zylinder Z1 bis Z6 ein zündfähiges Brennstoff-Luft-Gemisch, insbesondere Gas-Luft-Gemisch, befindet. Durch das Schließen des Zündschalters 34 wird durch die Primärspule Lₚ ein Magnetfeld in die Sekundärspule Lₛ induziert. Durch das induzierte Magnetfeld in der Sekundärspule Lₛ entsteht eine Sekundärspannung Uₛ, die einen Zündfunken 24 hervorruft.

Die Spannungsüberwachung 21 steuert basierend auf dem Steuersignal S den Unterbrechungsschalter 41. Im LVRT-Fall ist das Steuersignal S positiv und die Spannungsüberwachung 21 öffnet den Unterbrechungsschalter 41. Somit wird die primärseitige Zündleitung 33 unterbrochen und auf der Sekundärseite 32 entsteht kein Zündfunke 24. Auf diese Weise wird ein Abschalten der jeweiligen Zylinder Z1 bis Z6 im LVRT-Fall erreicht.

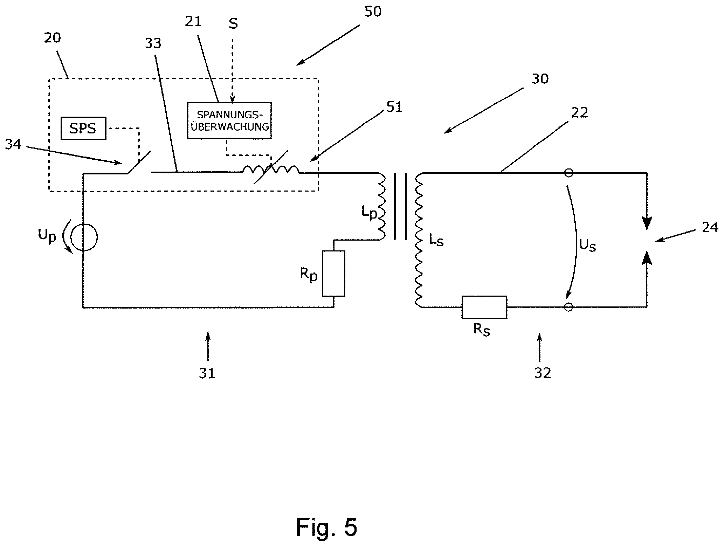

Fig. 5 zeigt eine zweite Ausführungsform der Abschalteinrichtung 50, die grundlegend der ersten Ausführungsform der Abschalteinrichtung 40 entspricht. Allerdings wird das Unterdrücken des Zündfunkens 24 nicht durch ein Unterbrechen der primärseitigen Zündleitung 33 erreicht. Anstelle des Unterbrechungsschalters 41 weist die primärseitige Zündleitung 33 eine regelbare Induktivität in Form einer regelbaren Spule 51 auf. Die Spannungsüberwachung 21 steuert basierend auf dem Steuersignal S die regelbare Spule 51.

Im LVRT-Fall ist das Steuersignal S positiv und die Spannungsüberwachung 21 erhöht stufenweise die Induktivität der regelbaren Spule 51. Durch die erhöhte Induktivität wird der Gradient des Spannungsabfalls auf der Sekundärseite 32 derart verringert, dass kein Zündfunke 24 entstehen kann. Somit unterbleibt eine Zündung des Brennstoff-Luft-Gemisches, insbesondere Gas-Luft-Gemisches, in den jeweiligen Zylindern Z1 bis Z6. Diese sind somit praktisch abgeschaltet. Der Stromfluss auf der Sekundärseite 32 wird dabei jedoch nicht verringert, da dieser von der Primärseite 31 konstant gehalten wird.

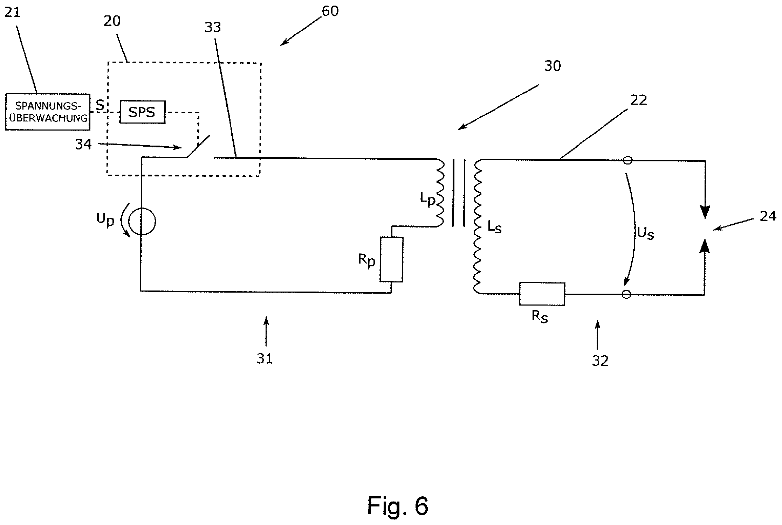

Fig. 6 zeigt eine dritte Ausführungsform der Abschalteinrichtung 60, welche grundlegend der ersten Ausführungsform der Abschalteinrichtung 40 und der zweiten Ausführungsform der Abschalteinrichtung 50 entspricht. Die dritte Ausführungsform der Abschalteinrichtung 60 weist allerdings weder eine Unterbrechungsvorrichtung 41 noch eine regelbare Spule 51 in der primärseitigen Zündleitung 33 auf. Vielmehr ist die Spannungsüberwachung 21 direkt mit der Zündsteuerung SPS verbunden. Die Spannungsüberwachung 21 steuert basierend auf dem Steuersignal S die Zündsteuerung SPS. Im LVRT-Fall ist das Steuersignal S positiv und die Zündsteuerung SPS verschiebt das Schließen des Zündschalters 34 auf einen Zeitpunkt, zu dem in den jeweiligen Zylindern Z1 bis Z6 bei einer Zündung keine Leistung umgesetzt werden kann. Der jeweilige Zylinder Z1 bis Z6 ist demnach praktisch abgeschaltet.

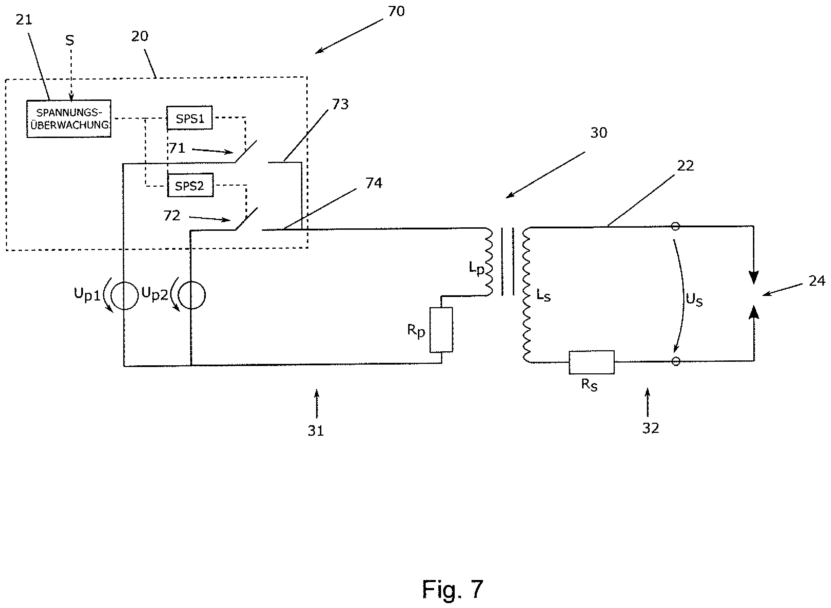

Fig. 7 zeigt eine vierte Ausführungsform der Abschalteinrichtung 70, welche grundlegend der ersten Ausführungsform der Abschalteinrichtung 40, der zweiten Ausführungsform der Abschalteinrichtung 50 und der dritten Ausführungsform der Abschalteinrichtung 60 entspricht. Die vierte Ausführungsform der Abschalteinrichtung 70 umfasst jedoch eine erste Zündanlage und eine zweite Zündanlage. Somit weist die Primärseite 31 zwei primärseitige Spannungsquellen auf, welche die Primärseite 31 mit der ersten Primärspannung Dₚ₁ und der zweiten Primärspannung Uₚ₂ versorgen. Ebenso weist die Primärseite 31 anstelle des Zündschalters 34 einen ersten Zündschalter 71 und einen zweiten Zündschalter 72 sowie anstelle der Zündsteuerung SPS eine erste Zündsteuerungen SPS1 und eine zweite Zündsteuerung SPS2 auf. Ferner weist die Primärseite 31 anstelle der primärseitigen Zündleitung 33 eine erste primärseitige Zündleitung 73 und eine zweite primärseitige Zündleitung 74 auf. Der Unterschied zwischen der ersten primärseitigen Zündleitung 73 und der zweiten primärseitigen Zündleitung 74 liegt in der unterschiedlichen Verschaltung zu den jeweiligen Zylindern Z1 bis Z6. Die erste primärseitige Zündleitung 73 ist nur mit nicht abzuschaltenden Zylindern verbunden. Beispielsweise ist die erste primärseitige Zündleitung 73 nur mit den Zylindern Z1 und Z2 verbunden, wohingegen die zweite primärseitige Zündleitung 74 mit allen Zylindern Z1 bis Z6 verbunden ist. Die Spannungsüberwachung 21 ist mit der ersten Zündsteuerungen SPS1 und der zweiten Zündsteuerung SPS2 verbunden und steuert die beiden Zündsteuerungen SPS1 und SPS2 unter Verwendung des Steuersignals S.

Im LVRT-Fall ist das Steuersignal S positiv und lediglich die erste Zündsteuerung SPS1 ist aktiv. Nachdem die damit verbundene erste primärseitige Zündleitung 73 nur mit den Zylindern Z1 und Z2 verbunden ist, findet auch nur in diesen beiden Zylindern Z1 und Z2 eine Zündung statt. Die Zylinder Z3 bis Z6 sind praktisch abgeschaltet. Ist das Steuersignal S negativ, ist lediglich die zweite Zündsteuerung SPS2 aktiv. Nachdem die damit verbundene zweite primärseitige Zündleitung 73 mit allen Zylindern Z1 bis Z6 verbunden ist, findet auch in allen Zylindern Z1 bis Z6 eine Zündung statt.

**Bezugszeichenliste**

| | | | |
|---|---|---|---|
| 10 | Stromaggregat | B | Brennstoff |
| 11 | Verbrennungskraftmaschine | U_{E} | Netzspannung |
| 12 | Synchron-Reluktanzgenerator | Uₚ | Primärspannung |
| 13 | Brennstoffleitung | Uₛ | Sekundärspannung |
| 14 | Drosselklappe | Uₚ₁ | erste Primärspannung |
| 15 | Welle | Uₚ₂ | zweite Primärspannung |
| 16 | Kompensationsanlage | N | Energieversorgungsnetz |
| 20 | Regelvorrichtung | P | Wirkleistung |
| 21 | Spannungsüberwachung | Q₁ | erste Blindleistung |
| 22 | Abschalteinrichtung | Q₂ | zweite Blindleistung |
| 24 | Zündfunken | S | Steuersignal |
| 30 | Zündspule | SPS | Zündsteuerung |
| 31 | Primärseite | SPS1 | erste Zündsteuerung |
| 32 | Sekundärseite | SPS2 | zweite Zündsteuerung |
| 33 | primärseitige Zündleitung | Z1 | Zylinder |
| 34 | Zündschalter | Z2 | Zylinder |
| 40 | Abschalteinrichtung | Z3 | Zylinder |
| 41 | Unterbrechungsschalter | Z4 | Zylinder |
| 50 | Abschalteinrichtung | Z5 | Zylinder |
| 51 | regelbare Spule | Z6 | Zylinder |
| 60 | Abschalteinrichtung | Lₚ | Primärspule |
| 70 | Abschalteinrichtung | Rₚ | Primärwiderstand |
| 71 | erste primärseitige Zündleitung | Lₛ | Sekundärspule |
| 72 | zweite primärseitige Zündleitung | Rₛ | Sekundärwiderstand |
| 73 | erste Zündsteuerung | | |
| 74 | zweite Zündsteuerung | | |

## Patentansprüche

1. Stromaggregat (10) zur Einspeisung von Energie in ein elektrisches Energieversorgungsnetz (N), umfassend:
einen als Synchron-Reluktanzgenerator (12) oder als Kurzschlussläufergenerator ausgebildeten Generator (12), der zum Aufbau und zur Aufrechterhaltung eines Rotormagnetfeldes eine erste Blindleistung (Q₁) aus dem Energieversorgungsnetz (N) bezieht;
eine Verbrennungskraftmaschine (11), die mindestens einen Zylinder (Z1 bis Z6) aufweist und durch die der Generator (12) zum Einspeisen von elektrischer Energie mit einer Wirkleistung (P) in das Energieversorgungsnetz (N) antreibbar ist;
**gekennzeichnet durch**
eine dem Generator (12) zugeordnete Kompensationsanlage (16), die dreiphasige Kondensatoren umfasst, die dem Generator (12) parallelgeschaltet sind, und die ausgebildet ist, dem Energieversorgungsnetz (N) eine zweite Blindleistung (Q₂), die den Bezug der ersten Blindleistung (Q₁) aus dem Energieversorgungsnetz (N) bei Bedarf eliminiert, bereitzustellen;
eine Regelvorrichtung (20), die zur dynamischen Netzstützung beim Durchfahren eines Fehlers des Energieversorgungsnetzes (N) mindestens einen Zylinder (Z1 bis Z6) der Verbrennungskraftmaschine (11) abschaltet;
wobei die Regelvorrichtung (20) eine Spannungsüberwachung (21) aufweist, die im Falle eines Fehlers des Energieversorgungsnetzes (N) ein Steuersignal (S) ausgibt, auf Basis dessen die Regelvorrichtung (20) das Abschalten des mindestens einen Zylinders (Z1 bis Z6) steuert, und
mindestens eine Drosselklappe (14) zum Drosseln der Leistung der Verbrennungskraftmaschine (11), die derart ausgestaltet ist, dass die Stellung der Drosselklappe (14) beim Durchfahren des Fehlers des Energieversorgungsnetzes (N) nahezu unverändert bleibt.

2. Stromaggregat (10) nach Anspruch 1, **dadurch gekennzeichnet, dass** der Fehler des Energieversorgungsnetzes (N) ein Low Voltage Ride Through - LVRT - Fall ist.

3. Stromaggregat (10) nach Anspruch 1 oder 2, **dadurch gekennzeichnet, dass** der Zylinder (Z1 bis Z6) zum Ausführen einer Zündung in dem Zylinder (Z1 bis Z6) eine primärseitige Zündleitung (33) umfasst, wobei die Regelvorrichtung (20) zum Abschalten des mindestens einen Zylinders (Z1 bis Z6) die primärseitige Zündleitung (33) unterbricht, um eine Zündung in dem Zylinder (Z1 bis Z6) zu verhindern.

4. Stromaggregat (10) nach Anspruch 1 oder 2, **dadurch gekennzeichnet, dass** der Zylinder (Z1 bis Z6) zum Ausführen einer Zündung in dem Zylinder (Z1 bis Z6) eine primärseitige Zündleitung (33) umfasst, an der eine regelbare Induktivität (51) angeordnet ist, wobei die Regelvorrichtung (20) zum Abschalten des mindestens einen Zylinders (Z1 bis Z6) die regelbare Induktivität (51) stufenweise erhöht, um eine Zündung in dem Zylinder (Z1 bis Z6) zu verhindern.

5. Stromaggregat (10) nach Anspruch 1 oder 2, **dadurch gekennzeichnet, dass** die Regelvorrichtung (20) geeignet ist, zum Abschalten des mindestens einen Zylinders (Z1 bis Z6) den Zeitpunkt der Zündung in dem Zylinder (Z1 bis Z6) auf einen Zeitpunkt zu verschieben, zu dem in dem Zylinder (Z1 bis Z6) bei einer Zündung keine Leistung umgesetzt wird.

6. Stromaggregat (10) nach Anspruch 1 oder 2, **dadurch gekennzeichnet, dass** der Zylinder (Z1 bis Z6) zum Ausführen einer Zündung in dem Zylinder (Z1 bis Z6) eine primärseitige Zündleitung (33) umfasst, die eine erste Zündanlage und eine zweite Zündanlage aufweist; wobei die zweite Zündanlage nicht an einen abzuschaltenden Zylinder (Z1 bis Z6) angeschlossen ist und wobei die Regelvorrichtung zum Abschalten des mindestens einen Zylinders (Z1 bis Z6) die zweite Zündanlage anstelle der ersten Zündanlage ansteuert.

7. Stromaggregat (10) nach einem der Ansprüche 1 bis 6, **dadurch gekennzeichnet, dass** die Spannungsüberwachung (21) als eine dreiphasige Spannungsüberwachung ausgebildet ist.

8. Verfahren zur Einspeisung von Energie in ein elektrisches Energieversorgungsnetz (N) mit Hilfe von einem Stromaggregat (10) nach einem der Ansprüche 1 bis 7, **dadurch gekennzeichnet, dass**
der Generator (12) zum Aufbau und zur Aufrechterhaltung eines Rotormagnetfeldes eine erste Blindleistung (Q₁) aus dem Energieversorgungsnetz (N) bezieht;
dem Energieversorgungsnetz (N) eine zweite Blindleistung (Q₂), die den Bezug der ersten Blindleistung (Q1) bei Bedarf eliminiert, von der Kompensationsanlage (16) bereitgestellt wird und
die Verbrennungskraftmaschine (11) derart geregelt wird, dass zur dynamischen Netzstützung beim Durchfahren eines Fehlers des Energieversorgungsnetzes (N) mindestens ein Zylinder (Z1 bis Z6) abgeschaltet wird;
wobei die Spannungsüberwachung (21) der Regelvorrichtung (20) im Falle eines Fehlers des Energieversorgungsnetzes (N) ein Steuersignal (S) ausgibt, auf Basis dessen das Abschalten des mindestens einen Zylinders (Z1 bis Z6) gesteuert wird, und
wobei die Stellung der Drosselklappe (14) beim Durchfahren des Fehlers des Energieversorgungsnetzes (N) nahezu unverändert bleibt.

9. Verfahren nach Anspruch 8, **dadurch gekennzeichnet, dass** der Fehler des Energieversorgungsnetzes (N) ein Low Voltage Ride Through - LVRT - Fall ist.

10. Verfahren nach Anspruch 8 oder 9 und Anspruch 3, **dadurch gekennzeichnet, dass** die Regelvorrichtung (20) zum Abschalten des mindestens einen Zylinders (Z1 bis Z6) die primärseitige Zündleitung unterbricht, um eine Zündung in dem Zylinder (Z1 bis Z6) zu verhindern.

11. Verfahren nach Anspruch 8 oder 9 und Anspruch 4, **dadurch gekennzeichnet, dass** die Regelvorrichtung (20) zum Abschalten des mindestens einen Zylinders (Z1 bis Z6) die regelbare Induktivität (51) stufenweise erhöht, um eine Zündung in dem Zylinder (Z1 bis Z6) zu verhindern.

12. Verfahren nach Anspruch 8 oder 9 und Anspruch 5, **dadurch gekennzeichnet, dass** die Regelvorrichtung (20) zum Abschalten des mindestens einen Zylinders (Z1 bis Z6) den Zeitpunkt der Zündung in dem Zylinder (Z1 bis Z6) auf einen Zeitpunkt verschiebt, zu dem in dem Zylinder (Z1 bis Z6) bei einer Zündung keine Leistung umgesetzt wird.

13. Verfahren nach Anspruch 8 oder 9 und Anspruch 6, **dadurch gekennzeichnet, dass** die Regelvorrichtung (20) zum Abschalten des mindestens einen Zylinders (Z1 bis Z6) die zweite Zündanlage anstelle der ersten Zündanlage ansteuert.

## Claims

1. Power generator (10) for feeding energy into an electrical power supply network (N), comprising:
a generator (12) designed as a synchronous reluctance generator (12) or as a squirrel-cage generator, which draws a first reactive power (Q₁) from the power supply network (N) in order to build up and maintain a rotor magnetic field;
an internal combustion engine (11) having at least one cylinder (Z1 to Z6), and by means of which the generator (12) can be driven to feed electrical energy with an active power (P) into the power supply network (N);
**characterised by**
a compensation system (16) associated with the generator (12), the compensation system (16) comprising three-phase capacitors connected in parallel with the generator (12) and being designed to provide the power supply network (N) with a second reactive power (Q2) which eliminates the provision of the first reactive power (Q₁) from the power supply network (N) when required;
a control device (20) which, for dynamic network support, shuts down at least one cylinder (Z1 to Z6) of the internal combustion engine (11) when a fault of the power supply network (N) is passed through;
the control device (20) having a voltage monitor (21) which, in the event of a fault in the power supply network (N), outputs a control signal (S) on the basis of which the control device (20) controls the shutdown of the at least one cylinder (Z1 to Z6), and
at least one throttle valve (14) for throttling the output of the internal combustion engine (11), which is designed in such a way that the position of the throttle valve (14) remains virtually unchanged when the fault of the power supply network (N) is passed.

2. Power generator (10) according to claim 1, **characterised in that** the fault of the power supply network (N) is a Low Voltage Ride Through (LVRT) event.

3. Power generator (10) according to claim 1 or 2, **characterised in that** the cylinder (Z1 to Z6), for carrying out an ignition in the cylinder (Z1 to Z6), comprises a primary-side ignition line (33) wherein the control device (20) for shutting off the at least one cylinder (Z1 to Z6) interrupts the primary-side ignition line (33) in order to prevent an ignition in the cylinder (Z1 to Z6).

4. Power generator (10) according to claim 1 or 2, **characterised in that** the cylinder (Z1 to Z6), for carrying out an ignition in the cylinder (Z1 to Z6), comprises a primary-side ignition line (33) on which a controllable inductance (51) is arranged, wherein the control device (20) for shutting off the at least one cylinder (Z1 to Z6) gradually increases the controllable inductance (51) in order to prevent an ignition in the cylinder (Z1 to Z6).

5. Power generator (10) according to claim 1 or 2, **characterised in that** the control device (20), in order to shut down the at least one cylinder (Z1 to Z6), is adapted for shifting the time of ignition in the cylinder (Z1 to Z6) to a time at which no power is converted in the cylinder (Z1 to Z6) during an ignition.

6. Power generator (10) according to claim 1 or 2, **characterised in that** the cylinder (Z1 to Z6), for carrying out an ignition in the cylinder (Z1 to Z6), comprises a primary-side ignition line (33) which has a first ignition system and a second ignition system;
wherein the second ignition system is not connected to a cylinder (Z1 to Z6) that can be shut off and wherein the control device, in order to shut off the at least one cylinder (Z1 to Z6), actuates the second ignition system instead of the first ignition system.

7. Power generator (10) according to any one of claims 1 to 6, **characterised in that** the voltage monitor (21) is designed as a three-phase voltage monitor.

8. Method for feeding energy into an electrical power supply network (N) by means of a power generator (10) according to any one of claims 1 to 7, **characterised in that**:
the generator (12) draws a first reactive power (Q₁) from the power supply network (N) in order to build up and maintain a rotor magnetic field;
the power supply network (N) is provided with a second reactive power (Q₂) which eliminates the provision of the first reactive power (Q₁) from the power supply network (N) when required; and
the internal combustion engine (11) is controlled in such a manner that, for dynamic network support, at least one cylinder (Z1 to Z6) is shut down when a fault of the power supply network (N) is passed through;
wherein the voltage monitor (21) of the control device (20), in the event of a fault in the power supply network (N), outputs a control signal (S) on the basis of which the at least one cylinder (Z1 to Z6) is shut off; and
wherein the position of the throttle valve (14) remains virtually unchanged when the fault of the power supply network (N) is passed.

9. Method according to claim 8, **characterised in that** the fault of the power supply network (N) is a Low Voltage Ride Through (LVRT) event.

10. Method according to claim 8 or 9 and claim 3, **characterised in that** the control device (20) for shutting off the at least one cylinder (Z1 to Z6) interrupts the primary-side ignition line in order to prevent ignition in the cylinder (Z1 to Z6).

11. Method according to claim 8 or 9 and claim 4, **characterised in that** the control device (20) for shutting off the at least one cylinder (Z1 to Z6) gradually increases the controllable inductance (51) in order to prevent ignition in the cylinder (Z1 to Z6).

12. Method according to claim 8 or 9 and claim 5, **characterised in that** the control device (20), in order to shut down the at least one cylinder (Z1 to Z6), shifts the time of ignition in the cylinder (Z1 to Z6) to a time at which no power is converted in the cylinder (Z1 to Z6) during ignition.

13. Method according to claim 8 or 9 and claim 6, **characterised in that** the control device (20) for shutting off the at least one cylinder (Z1 to Z6) actuates the second ignition system instead of the first ignition system.

## Revendications

1. Groupe de génération d'énergie (10) pour alimenter en énergie un réseau d'alimentation en énergie électrique (N), comportant :
un générateur (12) réalisé sous forme de générateur synchrone à reluctance (12) ou sous forme de générateur à rotor en court-circuit qui acquière une première puissance réactive (Q₁) depuis le réseau d'alimentation en énergie (N) afin d'établir ou de maintenir un champ magnétique de rotor ;
un moteur à combustion interne (11) qui possède au moins un cylindre (Z1 à Z6) et au moyen duquel le générateur (12) peut être entraîné pour alimenter le réseau d'alimentation en énergie électrique (N) avec une énergie électrique ayant une puissance active (P),
**caractérisé par**
un système de compensation (16) associé au générateur (12), qui comprend des condensateurs triphasés connectés en parallèle au générateur (12), et qui est conçu pour fournir au réseau d'alimentation en énergie (N) une deuxième puissance réactive (Q₂) qui, en cas de besoin, élimine l'acquisition de la première puissance réactive (Q₁) depuis le réseau d'alimentation en énergie (N),
un dispositif de régulation (20) qui, afin de fournir un support dynamique au réseau, coupe au moins un cylindre (Z1 à Z6) du moteur à combustion interne (11) lorsqu'un défaut se produit dans le réseau d'alimentation en énergie (N) ;
dans lequel
le dispositif de régulation (20) comporte un contrôleur de tension (21) qui, en cas de défaut du réseau d'alimentation en énergie (N), émet un signal de commande (S) sur la base duquel le dispositif de régulation (20) commande la coupure dudit au moins un cylindre (Z1 à Z6), et
au moins un papillon d'étranglement (14) pour la limitation de la puissance du moteur à combustion interne (11), qui est conçu de telle sorte que la position du papillon d'étranglement (14) reste pratiquement inchangée lorsque le défaut dans le réseau d'alimentation en énergie (N) se produit.

2. Groupe de génération d'énergie (10) selon la revendication 1,
**caractérisé en ce que**
le défaut du réseau d'alimentation en énergie (N) est un cas de traversée de basse tension (Low voltage Ride Through - LVRT).

3. Groupe de génération d'énergie (10) selon la revendication 1 ou 2,
**caractérisé en ce que**
le cylindre (Z1 à Z6) comprend une ligne d'allumage côté primaire (33) pour effectuer un allumage dans le cylindre (Z1 à Z6), et pour couper ledit au moins un cylindre (Z1 à Z6), le dispositif de régulation (20) interrompt la ligne d'allumage côté primaire (33) pour empêcher un allumage dans le cylindre (Z1 à Z6).

4. Groupe de génération d'énergie (10) selon la revendication 1 ou 2,
**caractérisé en ce que**
le cylindre (Z1 à Z6) comprend une ligne d'allumage côté primaire (33) pour effectuer un allumage dans le cylindre (Z1 à Z6), sur laquelle est disposée une inductance contrôlable (51), et pour couper ledit au moins un cylindre (Z1 à Z6), le dispositif de régulation (20) augmente par gradins l'inductance contrôlable (51) pour empêcher un allumage dans le cylindre (Z1 à Z6).

5. Groupe de génération d'énergie (10) selon la revendication 1 ou 2,
**caractérisé en ce que**
pour couper ledit au moins un cylindre (Z1 à Z6), le dispositif de régulation (20) est apte à décaler l'instant de l'allumage dans le cylindre (Z1 à Z6) à un instant auquel aucune puissance n'est convertie dans le cylindre (Z1 à Z6) pendant un allumage.

6. Groupe de génération d'énergie (10) selon la revendication 1 ou 2,
**caractérisé en ce que**
le cylindre (Z1 à Z6) comprend une ligne d'allumage côté primaire (33) pour effectuer un allumage dans le cylindre (Z1 à Z6), qui comporte un premier système d'allumage et un second système d'allumage, le second système d'allumage n'étant pas relié à un cylindre à couper (Z1 à Z6), et le dispositif de régulation pilote le second système d'allumage au lieu du premier système d'allumage afin de couper ledit au moins un cylindre (Z1 à Z6).

7. Groupe de génération d'énergie (10) selon l'une des revendications 1 à 6,
**caractérisé en ce que**
le contrôleur de tension (21) est réalisé sous forme de contrôleur de tension triphasé.

8. Procédé d'alimentation en énergie d'un réseau d'alimentation en énergie électrique (N) à l'aide d'un groupe de génération d'énergie (10) selon l'une des revendications 1 à 7,
**caractérisé en ce que**
le générateur (12) acquière une première puissance réactive (Q₁) depuis le réseau d'alimentation en énergie (N) afin d'établir et de maintenir un champ magnétique de rotor ;
le système de compensation (16) fournit une deuxième puissance réactive (Q2) au réseau d'alimentation en énergie (N), qui, en cas de besoin, élimine l'acquisition de la première puissance réactive (Q₁),
et le moteur à combustion interne (11) est régulé de telle sorte que, afin de fournir un support dynamique au réseau, au moins un cylindre (Z1 à Z6) est coupé lorsqu'un défaut se produit dans le réseau d'alimentation en énergie (N);
dans lequel
le contrôleur de tension (21) du dispositif de régulation (20), en cas de défaut du réseau d'alimentation en énergie (N), émet un signal de commande (S) sur la base duquel est commandée la coupure dudit au moins un cylindre (Z1 à Z6), et
la position du papillon d'étranglement (14) reste pratiquement inchangée lorsque le défaut dans le réseau d'alimentation en énergie (N) se produit.

9. Procédé selon la revendication 8,
**caractérisé en ce que**
le défaut du réseau d'alimentation en énergie (N) est un cas de traversée de basse tension (Low voltage Ride Through - LVRT).

10. Procédé selon la revendication 8 ou 9 et la revendication 3,
**caractérisé en ce que**
pour couper ledit au moins un cylindre (Z1 à Z6), le dispositif de régulation (20) interrompt la ligne d'allumage côté primaire pour empêcher un allumage dans le cylindre (Z1 à Z6).

11. Procédé selon la revendication 8 ou 9 et la revendication 4,
**caractérisé en ce que**
pour couper ledit au moins un cylindre (Z1 à Z6), le dispositif de régulation (20) augmente par gradins l'inductance contrôlable (51) pour empêcher un allumage dans le cylindre (Z1 à Z6).

12. Procédé selon la revendication 8 ou 9 et la revendication 5,
**caractérisé en ce que**
pour couper ledit au moins un cylindre (Z1 à Z6), le dispositif de régulation (20) décale l'instant de l'allumage dans le cylindre (Z1 à Z6) à un instant auquel aucune puissance n'est convertie dans le cylindre (Z1 à Z6) pendant un allumage.

13. Procédé selon la revendication 8 ou 9 et la revendication 6,
**caractérisé en ce que**
pour couper ledit au moins un cylindre (Z1 à Z6), le dispositif de régulation (20) pilote le second système d'allumage au lieu du premier système d'allumage.
